**Europäisches Patentamt**

**European Patent Office**

**Office européen des brevets**

(19)

(11) Veröffentlichungsnummer: **0 176 749**
**B1**

(12)

# EUROPÄISCHE PATENTSCHRIFT

(45) Veröffentlichungstag der Patentschrift:
**01.03.89**

(21) Anmeldenummer: **85110653.4**

(22) Anmeldetag: **24.08.85**

(51) Int. Cl.⁴: **F 16 H 21/46, B 01 F 11/00**

(54) Vorrichtung zum Antrieb eines Körpers, der eine taumelnde und rotierende Bewegung ausführt.

(30) Priorität: **17.09.84 DE 3434064**

(43) Veröffentlichungstag der Anmeldung:
**09.04.86 Patentblatt 86/15**

(45) Bekanntmachung des Hinweises auf die Patenterteilung:
**01.03.89 Patentblatt 89/9**

(84) Benannte Vertragsstaaten:
**CH DE FR GB IT LI**

(56) Entgegenhaltungen:
**WO-A-80/01830**
**CH-A- 216 760**
**CH-A- 366 710**
**DE-A- 2 259 737**
**DE-B- 1 207 750**
**DE-C- 1 145 455**

**Technische Rundschau 11 vom 20.3.1964, S. 11 und 13**

(73) Patentinhaber: **Oloid AG, Henric Petri-Strasse 35,**
**CH-4001 Basel (CH)**

(72) Erfinder: **Kuster, Kaspar, Sperrstrasse 104b,**
**CH-4004 Base (CH)**

(74) Vertreter: **Scheidegger, Zwicky, Werner & Co.,**
**Stampfenbachstrasse 48 Postfach, CH-8023 Zürich (CH)**

**Beschreibung**

Die Erfindung betrifft eine Vorrichtung zum Antrieb eines Körpers, der zur Ausführung einer taumelnden und rotierenden Bewegung, die auf dem Prinzip der umstülpbaren Gelenkkette beruht, an zwei gabelförmigen Lenkern mittels Drehzapfen zur Bewegung um zwei zueinander windschiefen Achsen aufgehängt ist, welche Lenker mittels je eines Schwenklagers mit dem Ende je einer von zwei zueinander parallelen Antriebswellen verbunden sind, die zwecks Erzielung einer regelmäßigen Körperbewegung gegensinnig und mit wechselweise vertauschter zunehmender bzw. abnehmender Winkelgeschwindigkeit rotieren müssen entsprechend den Merkmalen im Oberbegriff von Anspruch 1, wie sie aus der DE-PS-3 034 331 bekannt ist.

Ein taumelnder und rotierender Körper dieser Art dient insbesondere als Hohlkörper zur Aufnahme von Behandlungsgut, welches physikalischen oder chemischen Prozessen unterworfen wird, wobei aufgrund der gleichzeitigen Taumel- und Rotationsbewegung besonders günstige Wirkungen hinsichtlich des Ablaufs solcher Prozesse erzielt werden.

Der in der beschriebenen Weise taumelnde und rotierende Körper dient insbesondere zum Mischen, wobei die in bekannter Weise auf dem Prinzip der umstülpbaren Gelenkkette beruhende Bewegung keine Zentrifugalkräfte auftreten läßt, die einen Entmischungseffekt hervorrufen. Der Vorteil der taumelnden und rotierenden Bewegung besteht dabei darin, daß jeder Punkt des Körpers eine dreidimensionale Bahnlinie ohne Knotenpunkt beschreibt.

Bei einem zur Ausführung einer taumelnden und rotierenden Bewegung in der eingangs genannten Art aufgehängten Körper ist für dessen Antrieb zu berücksichtigen, daß jede der Wellen, an denen der Körper über Lenker schwenkbeweglich gehalten ist, ungleichförmig rotieren muß, wenn eine gleichmäßige Verteilung der an den beiden Wellen wechselweise verlangten Beschleunigungen bzw. Verzögerungen im Bewegungsablauf erzielt werden soll. Wenn diese Bedingung nicht erfüllt ist, bewegt sich der zu bewegende Körper unregelmäßig, was zur Folge hat, daß die vorstehend erwähnten besonderen Wirkungen auf das Behandlungsgut in dem Körper nicht zu erreichen sind und daß ein vorzeitiger Verschleiß von wichtigen Teilen der Maschine insbesondere in den Lagern eintritt.

Das vorstehend geschilderte Antriebsproblem, das darin besteht, daß bei einer zunehmenden Winkelgeschwindigkeit der einen Welle die andere Welle mit abnehmender Winkelgeschwindigkeit rotieren muß, was an den beiden Wellen dauernd wechselweise vertauscht erfolgen muß, beruht auf dem besonderen Bewegungsablauf dieses umstülpungskinematischen Systems. Diese systembedingte Ungleichförmigkeit der Winkelgeschwindigkeit der Wellen für den Antrieb des Körpers verursacht die Schwierigkeiten bei der Lösung des Antriebsproblems. Es sind verschiedene Lösungsvorschläge bekannt.

Aus der DE-PS 1 145 455 ist es bekannt, zur Lösung dieses Problems einen zwangsläufigen Antriebsmechanismus mit Hilfe je eines Kardan-Gelenkes zwischen der mit dem gabelförmigen Lenker verbundenen Welle und einer motorisch angetriebenen Welle vorzusehen, die mit der verlängerten Achse der von ihr angetriebenen, erstgenannten Welle einen Winkel von 45° bildet. Bei einem Kardan-Gelenk treten bekanntlich periodisch sich ändernde Winkelgeschwindigkeiten mit einem sinusförmigen Verlauf auf. Abgesehen von dem großen Platzbedarf des gesamten Antriebs ist auch die starke Abwinkelung von 45° ungünstig. Es tritt ein zu rascher Verschleiß auf, wobei die das gesamte Drehmoment übertragenden Kardan-Gelenke ausschlagen.

Eine aus der DE-PS 1 207 750 bekannte Vorrichtung zur Erzeugung einer taumelnden und rotierenden Körperbewegung weist zur Lösung des Antriebsproblems mit Hilfe eines nicht-zwangsläufigen Antriebsmechanismus ein Ausgleichsgetriebe in Form eines Reibkugelgetriebes an einer der Antriebswellen auf. Dabei ist zwischen einem lose auf der Antriebswelle angeordneten und gleichförmig durch ein Antriebselement angetriebenen Antriebsring und einen ebenfalls auf der Antriebswelle lose angeordneten Abtriebring ein auf der Welle aufgekeilter Kugelkäfig angeordnet, durch den die Antriebswelle in Rotation versetzt wird, während der gegenläufig sich drehende Antriebsring mit einem Kettenrad fest verbunden ist, um über eine Kette die parallel angeordnete zweite Antriebswelle gegensinnig zu drehen. Da aber die beiden Antriebswellen ungleichförmig rotieren, wobei während der Verzögerung der einen Antriebswelle die andere eine Beschleunigung erfährt, muß in diesem Ausgleichsgetriebe zwangsläufig soviel Reibung entstehen, daß diese Lösung für den Dauerbetrieb ungeeignet ist.

In der CH-PS 496 912 ist weiterhin ein Pendelantrieb beschrieben, bei dem auf der Antriebswelle ein schwenkbar mit derselben verbundenes Pendel angeordnet ist, auf welchem sich ein mit der Welle zwangsläufig gekoppeltes Steuerorgan, vorzugsweise in Form einer am Pendel drehbar gelagerten Kurbel, befindet, das in Wirkungsverbindung mit mindestens einem Festpunkt der Vorrichtung eine periodische, in Abhängigkeit von der Drehzahl der Welle erfolgende Schwenkbewegung des Pendels hervorruft. Die Kurbel wird über einen Riemen von der Welle, und zwar mit der halben Drehzahl derselben, angetrieben. Der mit dem Steuerorgan in Form der Kurbel in Wirkungsverbindung stehende Festpunkt der Vorrichtung ist ein Führungsschlitz, in welchem der Kurbelzapfen hin- und hergleitet. Bei jeder Umdrehung der Antriebswelle macht das Pendel zwei volle Hin- und Hergänge, wobei sich bei Bewegung des Pendels im Sinne der Drehrichtung der Antriebswelle durch Überlagerung der beiden Bewegungen eine Beschleunigung ergibt und bei Bewegung des Pendels in entgegengesetzter Richtung eine Verzögerung resultiert. Der sich ergebende Bewegungsablauf folgt nicht exakt der Sinuslinie, so daß zur Erzielung einer Ideallösung weitere konstruktive Maßnahmen notwendig sind, damit in jedem Augenblick der Bewegung der Führungsschlitz für die Kurbel sich in Parallellage zur Pendellängsachse befindet.

Bei diesem für die Praxis geeigneten Antrieb läßt sich allerdings nur eine mit dem in Bewegung zu setzenden Körper über den gabelförmigen Lenker verbundene Welle antreiben, während die mit dem Körper über den anderen gabelförmigen Lenker verbundene zweite Welle aufgrund dieser Verbindung über die Lenker mit der diesem System eigentümlichen ungleichförmigen Winkelgeschwindigkeit mitdreht. Man erzielt mit diesem Antrieb eine gegenüber dem zuvor erwähnten und aus der DE-PS 1 145 455 bekannten Antrieb ins Gewicht fallende Reduzierung der Herstellungskosten und des Platzbedarfs, aber da nur eine Welle angetrieben ist und für den im Idealfall sinusförmigen Verlauf der Winkelgeschwindigkeit nur eine gute Annäherungslösung erreichbar ist, setzt diese Konstruktion des Antriebs bestimmte Grenzen hinsichtlich der Größe bzw. des Gewichts des in Bewegung zu setzenden Körpers.

Um daher beide je über einen gabelförmigen Lenker mit dem in Bewegung zu versetzenden Körper verbundene Wellen anzutreiben, ist die aus der DE-PS 3 034 331 bekannte gattungsgemäße Lösung vorgeschlagen worden, die bei jeder der Wellen eine elastische Wellenkupplung zwischen einem gleichförmig angetriebenen Wellenteil und dem mit dem gabelförmigen Lenker verbundenen Wellenteil vorsieht, wobei zwischen den Kupplungsteilen auf einem Kreis abwechselnd hintereinander angeordnete Kugeln und Druckfedern als Kraftspeicher an jedem der beiden Kupplungsteile um 180° versetzt abgestützt sind, die eine periodisch sich wiederholende Relativverdrehung der Kupplungsteile zueinander und damit bei Speicherung der Kraft eine Verzögerung und bei Freisetzung der gespeicherten Kraft eine Beschleunigung des einen mit der Welle drehfest verbundenen Kupplungsteils zulassen, wobei das andere gleichförmig angetriebene Kupplungsteil auf der Welle verdrehbar angeordnet ist. Diese Lösung ist zwar für nicht zu große in eine taumelnde und rotierende Bewegung zu versetzenden Körper geeignet, kann aber nicht die nur durch einen zwangsläufigen Antrieb erreichbare, zur Erzielung optimaler Mischresultate notwendige Körperbewegung hervorbringen, weil dieser Lösung ein mehr oder weniger elastisches Ausweichen der antreibenden Elemente eigen ist. Die an den beiden Wellen wechselweise verlangten Beschleunigungen bzw. Verzögerungen erfolgen aufgrund der im Antriebssystem eingeschalteten elastischen Glieder nicht im richtigen Augenblick, so daß der Bewegungsrhythmus verfälscht wird. Durch das rhythmuswidrige Verhalten tritt ein unnötiger Energieverlust auf und die Wellenkupplungen werden einer erhöhten Belastung unterworfen, so daß Federn lahm werden können, wobei leicht vorstellbar ist, daß bei nur an einer Wellenkupplung lahm werdenden Federn der gesamte Rhythmus außer Kontrolle gerät. In der Praxis hat sich gezeigt, daß mit dem als Mischbehälter verwendeten Körper ausgestattete Mischmaschinen schlechtere Mischresultate erbrachten als mit einem zwangsläufigen Antrieb wie beispielsweise den vorerwähnten Kardan-Gelenken ausgestattete Maschinen, die jedoch in der technischen Realisierung sich als wenig geeignete Konstruktion erwiesen.

Für Rührwerke und Zentrifugen in der chemischen Industrie sind bereits hydrostatische Antriebe mit an eine gemeinsame Hydraulikpumpe angeschlossenen Hydraulikmotoren in Parallelschaltung bekannt (Technische Rundschau Nr. 11 vom 20.3.1964, Seiten 11 und 13, Hydrostatische Antriebe). Bei den bekannten Antrieben sind Hydraulikmotore mit festem Hubvolumen über Mengenregler und Steuerventile an die Pumpe angeschlossen, oder von zwei parallel geschalteten Hydraulikmotoren besitzt der eine ein festes und der andere ein veränderliches Hubvolumen, damit beispielsweise bei hintereinander angeordneten Walzmaschinen die auf die erste, mit einer festen Drehzahl laufende Walzmaschine folgende Walzmaschine entsprechend der Streckung des Walzgutes mit einer höheren Drehzahl drehen kann.

Da aber der taumelnde und rotierende Körper der eingangs beschriebenen Art nur bei dauernd wechselnden Winkelgeschwindigkeiten seiner beiden Antriebswellen gleichmäßig umläuft, läßt sich die Lösung der der vorliegenden Erfindung zugrunde liegenden Aufgabe, einen gattungsgemäßen Antrieb für den taumelnden und rotierenden Körper weiter zu bilden derart, daß die auf dem Prinzip der umstülpbaren Gelenkkette beruhende Körperbewegung rhythmusgerecht ablaufen kann, aufgrund der im Anspruch 1 aufgeführten Maßnahmen verwirklichen. Auf diese Weise können mit einem konstanten Volumenstrom der Pumpe zwei gleiche Hydraulikmotoren angetrieben werden, vorausgesetzt, daß an keiner Stelle Schlupf auftritt.

Die Vorteile des hydrostatischen Antriebs bestehen darin, daß alle Lager und Kräfte übertragenden Teile der Maschine viel weniger belastet werden als bei den vorerwähnten bekannten Maschinen und daß sich wesentlich größere, vorzugsweise als Hohlkörper zur Aufnahme von Behandlungsgut ausgebildete Körper in die taumelnde und rotierende Bewegung versetzen lassen, als dies bisher möglich war. Anstelle von Spezialanfertigungen wie die mit Federn ausgestatteten Wellenkupplungen gemäß DE-PS 3 034 331 können im Handel erhältliche Motoren und Pumpen verwendet werden. Gegenüber den vorbekannten Einrichtungen erzielt man eine Reduktion des Platzbedarfs für die Antriebseinheit.

In bevorzugter Weise läßt sich die Drehzahl der den Körper in eine taumelnde und rotierende Bewegung versetzenden Wellen durch eine in der an die Hydraulikpumpe angeschlossenen gemeinsamen Leitung angeordnete Durchflußregeleinrichtung wie beispielsweise ein Drosselventil oder eine Blende regeln. Diese gemeinsame Leitung verzweigt sich hinter der Regeleinrichtung in zwei an je einen Hydraulikmotor angeschlossene Leitungen. Dies gilt auch für den hydrostatischen Antrieb einer Mehrzahl von gleichen Vorrichtungen mit je einem taumelnden und rotierenden Körper, wobei dann jeder dieser Vorrichtungen eine Durchflußregeleinrichtung zugeordnet ist, die jeweils in einem an eine von der Pumpe kommende Druckleitung angeschlossenen Leitungsast angeordnet ist, welcher Leitungsast sich hinter der jeweiligen Durchflußregeleinrichtung zu den beiden Hydraulikmotoren hin verzweigt.

Der eine taumelnde und rotierende Bewegung ausführende Körper kann eine rotationssymmetrische Form wie beispielsweise ein zylindrischer Behälter aufweisen. Vorzugsweise ist der Behälter als sogenannter Oloid ausgebildet und weist einen mit einem Oloid formidentischen Hohlraum zur Aufnahme von Behandlungsgut zwecks Durchführung von physikalischen oder chemischen Prozessen auf. Man erzielt mit einem solchen Körper die aus der einschlägigen Literatur (siehe z.B. die DE-PS-3 034 331) bekannten außergewöhnlich guten Ergebnisse beim Mischen wie auch beim Emulgieren oder der Herstellung von Dispersionen etc. Der Oloidkörper entfaltet seine ihm eigenen besonderen Wirkungen aber auch in einem den Körper umgebenden Medium und dient dann beispielsweise zum Eintragen von Sauerstoff in Wasser für die Anwendung beispielsweise in Fischzuchtbetrieben etc.

Weitere Vorteile und Einzelheiten der Erfindung ergeben sich aus der nachfolgenden Beschreibung und den Zeichnungen, in denen eine Ausführungsform des Erfindungsgegenstandes rein beispielsweise dargestellt ist. Es zeigen:

Fig. 1 eine schematische Darstellung des Antriebs des taumelnden und rotierenden Körpers;

Fig. 2 eine schematische Darstellung des Antriebs für eine Mehrzahl von Maschinen mit je einem taumelnden und rotierenden Körper.

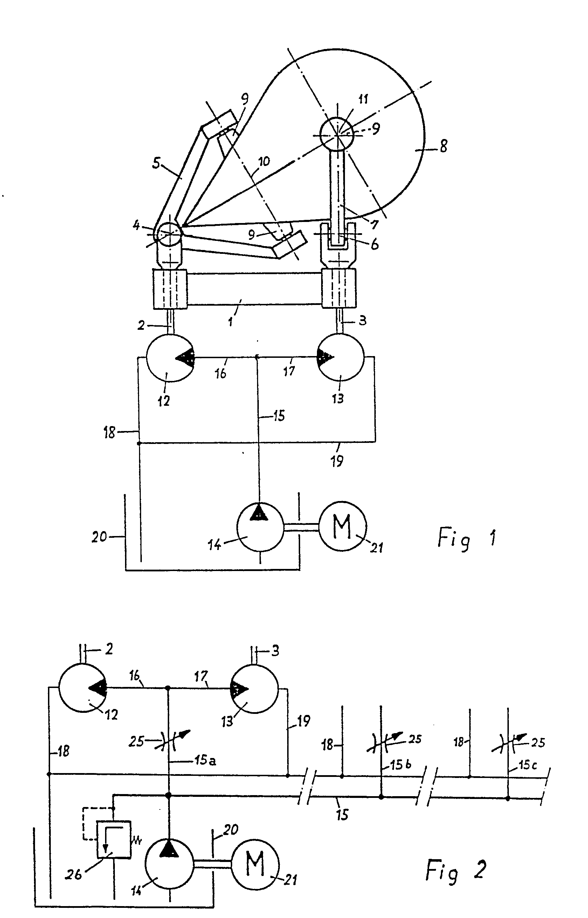

Gemäß Fig. 1 sind in einem Maschinengestell 1 zwei Antriebswellen 2 und 3 im Abstand und parallel zueinander drehbar gelagert. Am Ende der Welle 2 ist mittels eines Schwenklagers 4 ein gabelförmiger Lenker 5 schwenkbar befestigt und am Ende der Welle 3 ist ebenfalls mittels eines Schwenklagers 6 ein gabelförmiger Lenker 7 schwenkbar befestigt. In Fig. 1 ist die Drehstellung der beiden gabelförmigen Lenker 5 und 7 um 90° zueinander versetzt. An den beiden gabelförmigen Lenkern 5 und 7 ist der in Fig. 1 als Oloid ausgebildete Körper 8 mittels Drehzapfen 9, die in Fig. 1 nur bei dem linken gabelförmigen Lenker 5 erkennbar sind und bei dem rechten gabelförmigen Lenker 7 in zur Zeichenebene senkrechter Richtung hintereinander liegen, derart befestigt, daß der Körper 8 in bekannter Weise bei gegensinniger Drehung der Wellen 2 und 3 eine taumelnde und rotierende Bewegung ausführt, wobei der Körper sich um zueinander windschiefe Achsen 10 und 11 bewegt, welche von den Verbindungsgeraden der Drehzapfen 9 an den beiden gabelförmigen Lenkern 5 und 7 gebildet sind.

Damit der Körper 8 eine regelmäßige rotierende und taumelnde Bewegung ausführt, müssen die beiden Wellen 2 und 3 ungleichförmig rotieren, und zwar mit wechselweise vertauschter zunehmender bzw. abnehmender Winkelgeschwindigkeit. Das heißt mit anderen Worten, daß bei Beschleunigung der einen Welle die andere Welle im gleichen Ausmaß eine Verzögerung erfahren muß, welcher Vorgang sich pro Umdrehung der Welle 2-mal wiederholt.

Um die beiden Wellen 2 und 3 in der zuvor beschriebenen Weise anzutreiben, ist der Welle 2 ein volumetrischer Hydraulikmotor 12 und der Welle 3 ein volumetrischer Hydraulikmotor 13 zugeordnet, die beide gleiches Schluckvolumen besitzen. Die Motoren können beispielsweise Kolbenmotoren oder Zahnradmotoren sein und können direkt an das Ende der Welle 2 bzw. 3 angeflanscht sein oder über ein in der Zeichnung nicht dargestelltes kraftschlüssiges Getriebe mit der Welle in Verbindung stehen. Für den Antrieb sind die beiden Hydraulikmotoren 12 und 13 an eine gemeinsame volumetrische Hydraulikpumpe 14 über eine gemeinsame Druckleitung 15 und von dieser abzweigende Leitungen 16 und 17 angeschlossen. Von den Hydraulikmotoren 12 und 13 gelangt das Druckmedium über Rücklaufleitungen 18 und 19 in einen Ölbehälter 20 zurück, aus dem die durch einen Elektromotor 21 angetriebene Pumpe 14 Drucköl bezieht.

Wie vorstehend bereits erwähnt worden ist, ist der auf der umstülpbaren Gelenkkette beruhende Bewegungsablauf derart, daß bei Beschleunigung der einen Welle die andere Welle eine Verzögerung erfährt, so daß die Summe der beiden Drehbewegungen konstant ist. Die Hydraulikpumpe 14 liefert bei einer bestimmten Drehzahl ein konstantes Volumen an Drucköl, welches sich auf die beiden Hydraulikmotoren 12 und 13 derart aufteilt, daß jeder der beiden Hydraulikmotoren mit einem wechselweise vertauscht zunehmenden bzw. abnehmenden Teilvolumen beaufschlagt ist, wobei die Verteilung des Ölvolumens aufgrund der mechanischen Verbindung der beiden durch die Hydraulikmotoren angetriebenen Wellen 2 und 3 über die beiden gabelförmigen Lenker 5 und 7 und den Körper 8 zustande kommt, d.h. aufgrund der auf dem Bewegungsprinzip der umstülpbaren Gelenkkette beruhenden kinematischen Verbindung der beiden Wellen.

Die Drehzahl der beiden Wellen 2 und 3 läßt sich durch Regelung des Fördervolumens der Hydraulikpumpe 14 regeln. Zur Regelung kann auch eine in der an die Hydraulikpumpe 14 angeschlossenen gemeinsamen Leitung 15 angeordnete Durchflußregeleinrichtung dienen, die eine Durchflußblende oder ein Drosselventil sein kann und der ein Druckbegrenzungsventil zugeordnet ist, was in Fig. 1 nicht dargestellt ist.

In Fig. 2 ist schematisch und ohne Darstellung des in Drehung zu versetzenden Körpers und der dazu notwendigen Wellen ein Mehrfachantrieb gezeigt, der erkennen läßt, daß es mit dem hydraulischen Antrieb in bevorzugter Weise möglich ist, eine Mehrzahl von in eine taumelnde und rotierende Bewegung zu versetzenden Körpern 8 gemäß Fig. 1 mit Hilfe einer Hydraulikpumpe 14 anzutreiben. Dabei sind an eine an die Hydraulikpumpe 14 angeschlossene Hauptdruckleitung 15 eine Mehrzahl von zu jeweils 2 Hydraulikmotoren 12 und 13 führenden und sich verzweigenden Druckleitungen 15a, 15b und 15c angeschlossen und in jeder dieser Leitungen ist ein Drosselventil 25 angeordnet, so daß die Drehzahl jedes in Bewegung zu setzenden Körpers getrennt geregelt werden kann. Bei diesem Mehrfachantrieb ist in der Hauptdruckleitung 15 noch ein Druckbegrenzungsventil 26 vorgesehen.

Der in taumelnde und rotierende Bewegung zu versetzende Körper 8 ist in Fig. 1 als Oloid dargestellt und ist vorzugsweise ein Behälter mit einem Hohlraum, der auch Oloidform besitzt und zur Aufnahme von Behandlungsgut zur Durchführung von physikalischen oder chemischen Prozessen dient. Vorzugsweise dient der Körper zur Aufnahme von zu mischendem Behandlungsgut, wobei während des Bewegungsablaufes keine Zentrifugalkräfte auftreten, die häufig einen Entmischungseffekt hervorrufen. Der in der erfindungsgemäßen Weise angetriebene Körper kann aber auch jede andere Form aufweisen, beispielsweise zylindrisch ausgebildet sein, wenn der Körper sich an den gabelförmigen Lenkern beweglich aufhängen läßt. Ein als Oloid ausgebildeter Körper dient nicht nur als Mischbehälter sondern wird mit sehr gutem Erfolg auch in einem den taumelnden und rotierenden Körper umgebenden Medium eingesetzt, z.B. zum Eintragen von Sauerstoff in Wasser.

**Patentansprüche**

1. Vorrichtung zur Erzeugung einer auf dem Prinzip der umstülpbaren Gelenkkette beruhenden taumelnden und rotierenden Bewegung eines Körpers (8), der an zwei gabelförmigen Lenkern (5, 7) mittels Drehzapfen zur Bewegung um zwei zueinander windschiefe Achsen (10, 11) aufgehängt ist, welche Lenker mittels je eines Schwenklagers (4, 6) mit dem Ende je einer von zwei zueinander parallelen Antriebswellen (2, 3) verbunden sind, die aufgrund ihrer gegenseitigen Verbindung durch die Lenker und den Körper als Glieder der umstülpbaren Gelenkkette mit dem der letzteren eigentümlichen Bewegungsrhythmus gegensinnig und mit wechselweise vertauscht zunehmender bzw. abnehmender Winkelgeschwindigkeit drehbar sind, dadurch gekennzeichnet, daß als Antrieb für die Antriebswellen (2, 3) ein hydrostatischer Antrieb mit zwei gegensinnig drehenden, an eine gemeinsame volumetrische Hydraulikpumpe (14) angeschlossenen volumetrischen Hydraulikmotoren (12, 13) in Parallelschaltung verwendet ist, von welchen Hydraulikmotoren jeder eine der gegensinnig drehenden Antriebswellen über eine schlupffreie Verbindung antreibt und von dem Fördervolumen der Hydraulikpumpe ein wechselweise vertauscht zunehmendes bzw. abnehmendes Teilvolumen verbraucht, deren Summe gleich dem Pumpen-Fördervolumen ist.

2. Vorrichtung nach Anspruch 1, dadurch gekennzeichnet, daß in einer an die Hydraulikpumpe (14) angeschlossenen gemeinsamen Leitung (15), die sich in zwei an je einen Hydraulikmotor (12, 13) angeschlossene Leitungen (16, 17) verzweigt, eine Durchflußregeleinrichtung (25), z.B. eine Durchflußblende oder ein Drosselventil, für die Drehzahlregelung der Antriebswellen (2, 3) angeordnet ist.

3. Vorrichtung nach Anspruch 1, dadurch gekennzeichnet, daß die volumetrischen Hydraulikmotoren (12, 13) Kolbenmotoren oder Zahnradmotoren sind.

4. Vorrichtung nach einem der vorangehenden Ansprüche, dadurch gekennzeichnet, daß zum Antrieb einer Mehrzahl von Körpern (8) mittels je zweier Antriebswellen (2, 3) die je zwei Antriebswellen zugeordneten Hydraulikmotoren (12, 13) paarweise über je eine gemeinsame Leitung (15a, 15b, 15c) parallel an eine Hydraulikpumpe (14) angeschlossen sind.

5. Vorrichtung nach Anspruch 1, dadurch gekennzeichnet, daß der eine taumelnde und rotierende Bewegung ausführende Körper (8) als Oloid ausgebildet ist und einen mit einem Oloid formidentischen Hohlraum zur Aufnahme von Behandlungsgut zur Durchführung von physikalischen oder chemischen Prozessen aufweist oder zumindest in der Außenform als Oloid zur Erzeugung von Außenwirkungen in einem ihn umgebenden Medium, z.B. zum Eintragen von Sauerstoff in Wasser ausgebildet ist.

**Claims**

1. Device for producing a tumbling and rotating movement of a body (8) that, in order to perform a tumbling and rotating movement that is based on the principle of the invertible kinematic chain, is suspended by means of pivot pins on two forkshaped gimbals (5, 7) so that it moves about two axes (10, 11) that are askew to one another, which gimbals are each connected by means of a pivot bearing (4, 6) to the end of one of two parallel drive shafts (2, 3) which, due to the mechanical connection of the drive shafts by means of the forkshaped gimbals and the body as members of the invertible kinematic chain are rotatably with the rhythm of movement specific of said chain in opposite directions and at alternately interchanging increasing and decreasing angular speeds, characterized in that the driving means for the drive shafts (2, 3) are hydrostatic drive means including two volumetric hydraulic motors (12, 13) being rotating in opposite directions and connected parallel to a common volumetric hydraulic pump (14), each of the hydraulic motors is driving one of the driving shafts for rotating in opposite directions via a slip-free transmission and is consuming an alternately interchanging increasing respectively decreasing partial volume the sum of which is equal with the volumetric displacement of the pump.

2. Device according to claim 1, characterized in that in a common line (15) which is connected to the hydraulic pump (14), and which divides into two lines (16, 17) each of which is connected to a hydraulic motor (12, 13), there is arranged a flow regulating device (25), for example a variable flow aperture or a throttle valve for the regulating of the speed of the drive shafts (2, 3).

3. Device according to claim 1, characterized in that the volumetric hydraulic motors (12, 13), are piston motors or gear motors.

4. Device according to one of the preceding claims, characterized in that in order to drive a plurality of bodies (8) by means of pairs of drive shafts (2, 3), the hydraulic motors (12, 13) assigned to each two drive shafts are connected in pairs and in parallel to a hydraulic pump (14) by a common line (15a, 15b, 15c).

5. Device according to claim 1, characterized in that the body (8) performing a tumbling and rotating movement is constructed in the form of an oloid and has a hollow chamber of a shape identical to an oloid for receiving material to be treated for carrying out physical or chemical processes or it at least so constructed that externally it has an oloid shape for the purpose of producing external effects in a medium surrounding it, for example for the introduction of oxygen into water.

**Revendications**

1. Dispositif pour engendrer un mouvement d'oscillation et de rotation d'un corps (8) selon le principe d'une chaîne à articulations relevable, ledit corps étant accroché à deux bielles en forme de fourche (5, 7) au moyen de tourillons qui permettent le mouvement autour de deux axes décalés l'un par rapport à l'autre (10, 11), chacune des bielles étant reliée au moyen de paliers pivotants avec l'extrémité de chacun des arbres d'entraînement (2, 3), parallèles l'un par rapport à l'autre, lesdits axes pouvant tourner à des vitesses angulaires d'accélération et de décélération variables et inverses grâce à leur mécanisme de liaison inverse réalisé par les bielles et le corps, ces éléments étant utilisés en tant qu'éléments de la chaîne à articulations relevable, ledit corps pouvant exécuter un mouvement inverse d'accélération et de décélération, selon un rytme qui lui est propre, caractérisé en ce que, pour obtenir le mouvement des axes d'entraînement (2, 3), on utilise un entraînement hydrostatique comprenant deux moteurs hydrauliques volumétriques (12, 13) tournant en sens inverse l'un par rapport à l'autre et une pompe hydraulique commune (14) qui est reliée parallèlement aux deux moteurs, à partir desdits moteurs hydrauliques, chaque arbre d'entraînement étant actionné en rotation inverse par l'intermédiaire d'un système de liaison sans friction et en ce qu'il utilise un volume partiel alternativement croissant ou décroissant du débit hydraulique des pompes dont la somme est égale au débit volumétrique de la pompe.

2. Dispositif selon la revendication 1, caractérisé en ce que dans une des conduites communes (15) reliée à la pompe hydraulique (14) et qui se divise en deux conduites (16, 17), reliées chacune à un moteur hydraulique (12, 13), est monté un dispositif de régulation de débit (25), par exemple, un limiteur de débit ou une soupape de limitation de pression pour assurer la régulation de la vitesse de rotation des axes d'entraînement (2, 3).

3. Dispositif selon la revendication 1, caractérisé en ce que les moteurs hydrauliques volumétriques (12, 13) sont des moteurs à piston ou à engrenages.

4. Dispositif selon l'une quelconque des revendications 1 à 3, caractérisé en ce que, pour assurer l'entraînement d'une pluralité de corps (8) au moyen de chacun des deux axes de rotation (2, 3), chacun des deux arbres d'entraînement montés deux par deux (12, 13) est relié en parallèle à une conduite commune (15a, 15b, 15c), connectée à une pompe hydraulique (14).

5. Dispositif selon la revendication 1, caractérisé en ce que le corps (8) qui doit exécuter un mouvement d'oscillation et de rotation est réalisé sous une forme «Oloid» et possède un corps creux de forme «Oloid» afin de contenir les matières à traiter pour l'exécution des procédés physiques ou chimiques, ou au moins présente la forme extérieure «Oloid» permettant d'obtenir des résultats dans le milieu où le corps est plongé, par exemple, pour l'apport d'oxygène dans l'eau.

Fig 1

Fig 2